# EUROPÄISCHE PATENTSCHRIFT

(11) **EP 1 802 503 B1**
(45) Veröffentlichungstag und Bekanntmachung des Hinweises auf die Patenterteilung: **16.12.2009**
(21) Anmeldenummer: 05797003.0
(22) Anmeldetag: 13.10.2005
(51) Int. Cl.: B60T 8/40

(54) **BREMSANLAGE FÜR KRAFTFAHRZEUGE**
BRAKE SYSTEM FOR MOTOR VEHICLES
SYSTEME DE FREINAGE POUR VEHICULE A MOTEUR

(30) Priorität: 15.10.2004 DE 102004050112; 04.08.2005 DE 102005036638
(43) Veröffentlichungstag der Anmeldung: 04.07.2007
(73) Patentinhaber: Continental Teves AG & Co. oHG, 60488 Frankfurt am Main (DE)
(72) Erfinder: DRUMM, Stefan, 55291 Saulheim (DE)
(86) Internationale Anmeldenummer: PCT/EP2005/055244
(87) Internationale Veröffentlichungsnummer: WO 2006/042822

(56) Entgegenhaltungen:
- EP-A- 0 326 965
- EP-A- 0 478 396
- EP-A- 1 078 833
- DE-A1-102004 025 638

## Beschreibung

Die Erfindung betrifft eine Bremsanlage für Kraftfahrzeuge mit einem Hauptzylinder, an den Radbremszylinder anschließbar sind, einem ersten Kolben, der über eine Betätigungskräfte übertragende Druckstange mit einem Bremspedal gekoppelt ist, einem zweiten Kolben, über den der Hauptzylinder betätigt wird, einem dritten Kolben, der vom ersten Kolben betätigbar ist, und der in eine kraftübertragende Verbindung mit dem zweiten Kolben bringbar ist, mindestens einem elastischen Element, das einen Pedalwegsimulator bildet, der in einer Betriebsart "brake-by-wire" dem Fahrzeugführer ein angenehmes Pedalgefühl vermittelt, Mitteln zum Koppeln der Bewegungen des ersten und des dritten Kolbens, die in Abhängigkeit vom Verfahrweg des dritten Kolbens in einem Gehause aktiviert werden, einem mit hydraulischem Druck beaufschlagbaren Zwischenraum zwischen dem zweiten und dem dritten Kolben, wobei eine Druckbeaufschlagung des Zwischenraums den zweiten und den dritten Kolben in entgegengesetzter Richtung belastet, sowie einem Druckbereitstellungsmodul, das sowohl ein Befüllen des Zwischenraums mit Druckmittel als auch dessen Entlseren ermöglicht.

In der Kraftfahrzeugtechnik finden "brake-by-wire"-Bremssysteme eine immer größere Verbreitung. Bei diesen Bremssystemen kann die Bremse auch ohne aktives Zutun des Fahrers aufgrund elektronischer Signale "fremd-" betätigt werden. Diese elektronischen Signale können beispielsweise von einem elektronischen Stabilitatsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die von der Fremdbetatigung der Bremse verursachte Rückwirkung auf das Bremspedal irritiert wird.

Eine Bremsanlage der eingangs genannten Gattung ist aus der zwischen dem zweiten Prioritätstag und dem Anmeldetag veröffentlichten DE 10 2004 025 638 A1 bekannt. Eine "Fremdbetätigung" der vorbekannten Bremsanlage bzw. eine Druckbeaufschlagung des Zwischenraums erfolgt in der Betriebsart "brake-by-wire" durch das Druckbereitstellungsmodul mittels einer elektrisch ansteuerbaren Ventileinrichtung. Als nachteilig wird bei der vorbekannten Bremsanlage die Tatsache empfunden, dass eine Unterstützung der vom Fahrzeugführer aufgebrachten Betätigungskraft nur bei intakter Elektronik und der im Fahrzeug vorhandenen Energieversorgung (Generator, Batterie und Bordnetz) möglich ist.

Aus der EP 1 078 833 A2 ist ebenfalls eine Bremsanlage der eingangs genannten Gattung bekannt. Bei der vorbekannten Bremsanlage ist vorgesehen, dass der zweite und der dritte Kolben durch einen Zwischenraum voneinander getrennt sind so dass der dritte Kolben durch den den zweiten Kolben beaufschlagenden Druck in der der Beaufschlagungsrichtung des zweiten Kolbens entgegengesetzten Richtung beaufschlagt wird.

Es ist daher Aufgabe der vorliegenden Erfindung, eine Bremsanlage der eingangs genannten Gattung vorzuschlagen, bei der eine Unterstützung der Betätigungskraft auch bei einem Ausfall der Steuerelektronik oder der elektrischen Energieversorgung möglich ist, wobei das Pedalgefühl außer in einer zum sicheren Betrieb erforderlichen Rückfallebene unter allen Bedingungen stets gleich bleiben soll.

Diese Aufgabe wird erfindungsgemäß dadurch gelöst, dass das Druckbereitstellungsmodul als eine mittels eines pneumatischen Aktuators betätigbare Kolben-Zylinderanordnung ausgebildet ist und dass der pneumatische Aktuator mittels eines Steuerventils betätigbar ist, das sowohl durch das Bremspedal als auch unabhängig vom Bremspedal fremdbetatigbar ist.

Bei einer vorteilhaften Weiterbildung der Erfindung ist ein der Kolben-Zylinderanordnung zuschaltbares Motor-Pumpen-Aggregat vorgesehen. Durch diese Maßnahme wird erreicht, dass der im Zwischenraum eingesteuerte Druck weiter erhoht werden kann.

Eine andere vorteilhafte Ausfuhrung des Erfindungsgegenstandes sieht vor, dass der pneumatische Aktuator ein Gehause aufweist, dessen Innenraum durch eine bewegliche Wand in eine Unterdruckkammer sowie eine Arbeitskammer unterteilt ist, die mittels des Steuerventils mit einem Unterdruck oder dem Atmosphärendruck beaufschlagbar ist.

Weitere vorteilhafte Ausfuhrungsformen der Erfindung sind in den Patentanspruchen 4 bis 23 aufgefuhrt.

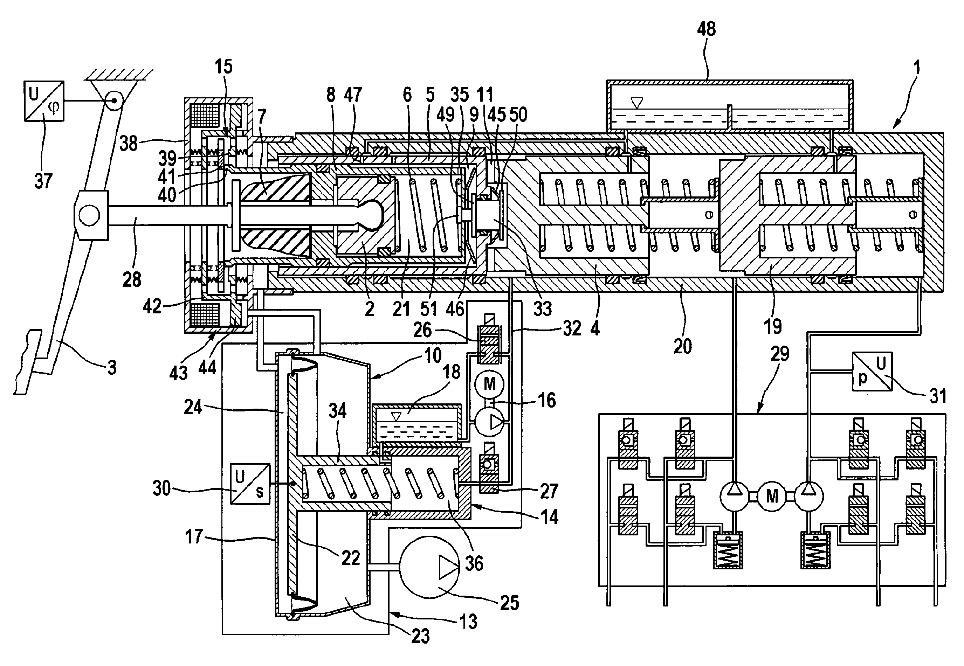

Im nachfolgenden Text wird eine Ausfuhrungsform der Erfindung unter Bezugnahme auf die beiliegende schematische Zeichnung naher erlautert, deren einzige Figur den Aufbau der erfindungsgemaßen Bremsanlage zeigt.

Die in der Zeichnung dargestellte erfindungsgemaße Bremsanlage weist ein Bremspedal 3 auf, das uber eine Betatigungsstange 28 mit einem ersten Kolben 2 wirkungsmäßig verbunden ist. Der Bremspedalweg kann uber einen Drehwinkelsensor 37 erfasst werden. Der erste Kolben 2 ist in einem vierten Kolben 8 angeordnet, wobei zwischen dem ersten und dem vierten Kolben 8 ein Simulatorraum 21 ausgebildet ist, in dem eine Druckfeder 6 angeordnet ist, die bei unbetätigtem Pedal den ersten Kolben 2 zur Anlage am vierten Kolben 8 bringt. Der vierte Kolben 8 ist in einem dritten Kolben 5 verschiebbar gefuhrt und begrenzt in letzterem eine hydraulische Kammer 9, die uber einen Durchlass 35 mit dem Simulatorraum 21 und über einen weiteren Durchlass 47 mit einem drucklosen Druckmittelvorratsbehalter 48 in Verbindung steht. Der weitere Durchlass 47 wird durch eine Relativbewegung des dritten Kolbens 5 gegenuber dem Gehause 20 abgesperrt. Ein elastisches Element 7, beispielsweise eine Elastomerfeder, ist wirkungsmäßig zwischen der Betatigungsstange 28 und dem vierten Kolben 8 angeordnet und bildet zusammen mit der Feder 6 einen Pedalwegsimulator, der dem Fahrzeugführer bei der Betätigung der Bremsanlage das gewohnte Pedalgefuhl vermittelt, das einer ublichen Bremspedalcharakteristik entspricht. Dies bedeutet, dass bei geringem Bremspedalweg der Widerstand langsam ansteigt und bei großerem Bremspedalweg uberproportional zunimmt. Die vorhin erwahnte Druckfeder 6 konnte ebenso gut "trocken", d.h., außerhalb des Simulatorraums 21 angeordnet werden, beispielsweise parallel zur Elastomerfeder 7.

Weiterhin ist ein zweiter Kolben 4 vorgesehen, der einen Betatigungskolben eines Hauptbremszylinders 1 darstellt. Im gezeigten Beispiel ist der Hauptbremszylinder 1 als Tandemhauptzylinder ausgefuhrt, bei dem dem zweiten Kolben 4 ein weiterer Kolben 19 nachgeschaltet ist. An den Hauptbremszylinder 1 sind uber ein steuerbares Radbremsdruckmodulationsmodul 29 die Radbremsen des Fahrzeugs angeschlossen, wobei ein Drucksensor 31 zum Erfassen des im Hauptzylinder 1 eingesteuerten hydraulischen Druckes vorgesehen ist. Selbstverstandlich können weitere Drucksensoren, beispielsweise zur Erfassung der einzelnen Radbremsdrucke eingesetzt werden.

Alle Kolben 2, 4, 5, 8, 19 sind in einem Gehause 20 untergebracht, wobei der zweite Kolben 4, der dritte Kolben 5 sowie der weitere Kolben 19 des Hauptzylinders bei der dargestellten Ausfuhrung gleiche Durchmesser bzw. gleiche Querschnittsflachen aufweisen. Zwischen dem dritten Kolben 5 und dem zweiten Kolben 4 befindet sich ein Zwischenraum 11, wobei der dritte Kolben 5 zwischen dem Zwischenraum 11 und der hydraulischen Kammer 9 einen Durchbruch aufweist, in dem ein fünfter Kolben 33 hydraulisch abgedichtet, axial verschiebbar angeordnet ist, dessen Relativbewegung gegenuber dem dritten Kolben 5 durch in bzw. entgegen der Betätigungsrichtung wirkende Anschlage 49 bzw. 50 begrenzt ist. Zwischen dem entgegen der Betätigungsrichtung wirkenden Anschlag 50 und der dem Zwischenraum 11 zugewandten Stirnflache des dritten Kolbens 5 ist eine den fünften Kolben 33 in der Betätigungsrichtung vorspannende Feder 45 vorgesehen, wahrend zwischen dem dritten Kolben 5 und dem vierten Kolben 8 eine zweite Feder 46 wirkt. Ein am fünften Kolben 33 ausgebildeter dritter Anschlag 51 begrenzt die Relativbewegung des vierten Kolbens 8 gegenuber dem dritten Kolben 5. Der Zwischenraum 11 ist mittels einer hydraulischen Verbindung 32 mit einem Druckbereitstellungsmodul 13 verbunden, das seine Druckbeaufschlagung ermoglicht.

Das Druckbereitstellungsmodul 13 wird im wesentlichen durch eine mittels eines pneumatischen Aktuators 10 betätigbare Kolben-Zylinderanordnung 14 gebildet, der ein Motor-Pumpen-Aggregat 16 zugeschaltet ist. Ein Druckmittelvorratsbehalter 18 ist sowohl mit dem pneumatischen Aktuator 10 als auch mit der Ansaugseite des Motor-Pumpen-Aggregats 16 verbunden. Anstelle des dargestellten, dem Druckbereitstellungsmodul zugeordneten Behalters kann auch eine Schlauchverbindung zum Druckmittelvorratsbehalter 48 eingesetzt werden. Der pneumatische Aktuator 10 weist ein Aktuatorgehause 17 auf, in dem eine an eine Vakuumpumpe 25 oder eine äquivalente Luftabsaugvorrichtung angeschlossene Unterdruckkammer 23 sowie eine beluftbare Arbeitskammer 24 durch eine bewegliche Wand 22 voneinander getrennt sind. Die bewegliche Wand 22 steht in einer kraftubertragenden Verbindung mit dem lediglich schematisch angedeuteten Kolben 34 der Kolben-Zylinderanordnung 14, an deren Druckraum 36 die vorhin erwähnte Leitung 32 angeschlossen ist. Andererseits steht der Druckraum 36 uber eine absperrbare Verbindung mit dem drucklosen Druckmittelvorratsbehalter 18 in Verbindung. Dem Motor-Pumpenaggregat 16 ist ein analog regelbares, elektromagnetisch betatigbares 2/2-Wegeventil 26 parallel geschaltet, das dem genauen Einregeln des vom Motor-Pumpenaggregat 16 gelieferten Druckes dient.

Außerdem ist in der hydraulischen Verbindung 32 zwischen dem Zwischenraum 11 und dem elektrohydraulischen Druckbereitstellungsmodul 13 ein ebenfalls elektromagnetisch betatigbares, stromlos offenes 2/2-Wegeventil 27 eingefügt, das in der "bestromten" Schaltstellung die Funktion eines zur Kolben-Zylinderanordnung 14 hin schließenden Ruckschlagventils erfullt.

Der Ansteuerung des pneumatischen Aktuators 10 dient ein Steuerventil, das mit dem Bezugszeichen 15 versehen und in einem Steuerventilgehause 38 angeordnet ist, das im Eingangsbereich des Hauptzylindergehauses 20 an diesem befestigt ist. Das Steuerventil 15 besteht aus einem ersten bzw. einem Unterdruckdichtsitz 39, einem zweiten bzw. einem Atmospharendichtsitz 40 sowie einem mit den Dichtsitzen 39, 40 zusammen wirkenden ringformigen Ventilkörper 41. Der Atmosphärendichtsitz 40 ist vorzugsweise an dem dem Bremspedal 3 zugewandten Ende des vierten Kolbens 8 ausgebildet, wahrend der Unterdruckdichtsitz 39 an einem Ring 42 ausgebildet ist. Außerdem ist im Steuerventilgehause 38 ein elektrischer Aktuator - beispielsweise ein Elektromagnet 43 vorgesehen, dessen Anker mit dem Ring 42 verbunden bzw. mit diesem einteilig ausgefuhrt ist, und der eine vom Bremspedal 3 unabhangige Fremdbetatigung des Steuerventils 15 ermoglicht.

Der vorhin erwähnte, im vierten Kolben 8 angeordnete Simulatorraum 21 ist Bestandteil einer hydraulischen Absperrvorrichtung zum Koppeln der Bewegungen des ersten (2) und des dritten (5) bzw. des vierten Kolbens 8, die in Abhängigkeit vom Verfahrweg des dritten Kolbens 5 im Hauptzylindergehause 20 aktiviert wird. Zu diesem Zweck ist zwischen dem Simulatorraum 21 und dem dem Hauptbremszylinder 1 zugeordneten Druckmittelvorratsbehalter 48 eine hydraulische Verbindung vorgesehen, die uber den Durchlass 35 im dritten Kolben 5 mit einem im vierten Kolben 8 ausgebildeten Abschnitt der hydraulischen Kammer 9 verbunden ist, der in den Simulatorraum 21 mundet. Bei einer Bremspedalbetatigung verschiebt sich infolge einer geeigneten Befederung zunachst der vierte Kolben 8 im dritten Kolben 5. Dadurch wird der Unterdruckdichtsitz 39 geschlossen und der Atmospharendichtsitz 40 geoffnet, wodurch die Arbeitskammer 24 des pneumatischen Aktuators 10 im Druckbereitstellungsmodul 13 beluftet wird und die daraus resultierende Kraftwirkung auf die bewegliche Wand 22 den Kolben 34 der Kolben-Zylinderanordnung 14 betätigt. Der so erzeugte hydraulische Druck im Druckraum 36 wird uber die hydraulische Verbindung 32 dem Zwischenraum 11 im Hauptzylindergehause 20 zugeführt. So wird zum einen der Hauptbremszylinder 1 betätigt und zum anderen wird der dritte Kolben 5 an einen gehäuseseitigen Anschlag angedruckt, wodurch der Durchlass 35 offen und der Pedalwegsimulator funktionsfähig bleibt. Bei ungenugendem oder fehlendem Verstarkerdruck im Zwischenraum 11 verschiebt sich der dritte Kolben 5 im Hauptzylindergehause 20, wodurch der Durchlass 35 verschlossen und der Pedalwegsimulator abgeschaltet wird, indem die Bewegung des dritten Kolbens 5 hydraulisch an die Bewegung des ersten Kolbens 2 gekoppelt wird. Dabei können die in der Absperrvorrichtung enthaltenen hydraulischen Verbindungen als hydraulische Drosselelemente zur hydraulischen Bedampfung des Pedalwegsimulators 6,7 dienen, wobei wenigstens eines der hydraulischen Drosselelemente ein durchstromungsrichtungsabhangiges Verhalten aufweisen kann.

Die erfindungsgemaße Bremsanlage kann in verschiedenen Betriebsarten arbeiten. In einem unbetatigten Zustand liegt in beiden Kammern 23, 24 des pneumatischen Aktuators 10 der gleiche Druck vor, da der Unterdruckdichtsitz 39 offen ist.

In einem rein elektrisch gesteuerten Betriebsmodus wird u-ber den elektromechanischen Aktuator 43 das Steuerventil 15 im Sinne der Beluftung der Arbeitskammer 24 des pneumatischen Aktuators 10 betätigt. Dabei wird der vorhin erwahnte Unterdruckdichtsitz 39 geschlossen und der Atmospharendichtsitz 40 geoffnet. Durch die Kraftwirkung der eingestromten Luft an der beweglichen Wand 22 wird im Druckraum 36 der Kolben-Zylinderanordnung 14 ein hydraulischer Druck aufgebaut, der uber das offene 2/2-Wegeventil 27 und die Leitung 32 dem Zwischenraum 11 zugeführt wird. Durch diesen Druck werden der zweite (4) sowie der weitere Kolben 19 des Hauptzylinders 1 in der Zeichnung nach rechts verschoben, so dass Druckmittel in beide lediglich angedeutete Bremskreise stromt. Wird ein hoherer Druck im Zwischenraum 11 angefordert, als der pneumatische Aktuator 10 mit dem momentan zur Verfugung stehenden Unterdruck zu liefern imstande ist, so kann der Druckaufbau im Zwischenraum 11 vom Motor-Pumpen-Aggregat 16 unterstutzt werden.

In einem ersten pedalgesteuerten Betriebsmodus bewirkt eine Betätigung des Bremspedals 3 eine mechanische Ansteuerung des Steuerventils 15, die den oben erläuterten Effekt zur Folge hat. Selbstverstandlich ist auch ein kombinierter Betriebsmodus mit gleichzeitiger pedalgesteuerter und elektrischer Ansteuerung des Steuerventils 15 möglich. Dieser Modus wird beispielsweise verwendet, um die in Fachkreisen der der Bremsentechnik wohlbekannte Funktion des Bremsassistenten zu erfüllen, die darin besteht, dass bestimmte bremspedalgesteuerte Bremsvorgange beschleunigt und intensiviert werden.

In einem weiteren Betriebsmodus, der einer Rückfallebene entspricht, kann im Zwischenraum 11 aufgrund einer Storung der oben beschriebenen Ablaufe kein hydraulischer Druck aufgebaut werden, wodurch eine Kraftubertragung vom dritten Kolben 5 auf den zweiten Kolben 4 durch direkten Kontakt erfolgt. Die Betätigung des Hauptbremszylinders 1 erfolgt ausschließlich mit Muskelkraft.

Durch die vorliegende Erfindung wird eine einfach aufgebaute Bremsanlage erreicht, bei der die Bremspedalcharakteristik nicht vom Betatigungszustand der restlichen Bremsanlage abhangt, wodurch das Pedalgefuhl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitatsregelung gestort werden kann.

Die Bremsanlage hat weiterhin den Vorteil, dass sie einfacher aufgebaut ist als herkömmliche Bremsanlagen. Fahrzeuge mit einer elektronischen Stabilitatsregelfunktion (ESP) benotigen beispielsweise eine spezielle ESP-Hydraulik, die komplizierter ist als eine normale ABS-Hydraulik, da sie im Gegensatz zur ABS-Hydraulik auch die Fahigkeit zum Aufbau von Radbremsdrucken oberhalb des Hauptzylinderdrucks besitzen muss. Die vorgeschlagene Bremsanlage kommt dagegen auf der dem Hauptzylinder nachgeschalteten Seite mit einem einfachen, lediglich acht Elektromagnetventile enthaltenden "ABS"-Hydraulikmodul aus.

## Patentansprüche

1. Bremsanlage für Kraftfahrzeuge mit:
• einem Hauptzylinder (1), an den Radbremszylinder anschließbar sind,
• einem ersten Kolben (2), der über eine Betätigungkräfte übertragende Druckstange (28) mit einem Bremspedal (3) gekoppelt ist,
• einem zweiten Kolben (4), über den der Hauptzylinder (1) betätigt wird,
• einem dritten Kolben (5), der vom ersten Kolben (2) betätigbar ist, und der in eine kraftübertragende Verbindung mit dem zweiten Kolben (4) bringbar ist,
• mindestens einem elastischen Element (6,7), das einen Pedalwegsimulator bildet, der in der Betriebsart "brake-by-wire" dem Fahrzeugführer ein angenehmes Pedalgefühl vermittelt,
• Mitteln zum Koppeln der Bewegungen des ersten und des dritten Kolbens, die in Abhängigkeit vom Verfahrweg des dritten Kolbens (5) in einem Gehäuse (20) aktiviert werden,
• einem mit hydraulischem Druck beaufschlagbaren Zwischenraum (11) zwischen dem zweiten (4) und dritten Kolben (5), wobei eine Druckbeaufschlagung des Zwischenraums (11) den zweiten und den dritten Kolben (4, 5) in eingegengesetzter Richtung belastet,
• sowie einem Druckbereitstellungsmodul (13), das sowohl ein Befüllen des Zwischenraums (11) mit Druckmittel als auch dessen Entleeren ermöglicht,
**dadurch gekennzeichnet, dass** das Druckbereitstellungsmodul (13) als eine mittels eines pneumatischen Aktuators (10) betätigbare Kolben-Zylinderanordnung (14) ausgebildet ist und dass der pneumatische Aktuator (10) mittels eines Steuerventils (15) betätigbar ist, das sowohl durch das Bremspedal (3) als auch unabhängig vom Bremspedal (3) fremdbetätigbar ist.

2. Bremsanlage nach Anspruch 1, **dadurch gekennzeichnet, dass** ein der Kolben-Zylinderanordnung (14) zuschaltbares Motor-Pumpen-Aggregat (16) vorgesehen ist.

3. Bremsanlage nach Anspruch 1 oder 2, **dadurch gekennzeichnet, dass** der pneumatische Aktuator (10) ein Gehäuse (17) aufweist, dessen Innenraum durch eine bewegliche Wand (22) in eine Unterdruckkammer (23) sowie eine Arbeitskammer (24) unterteilt ist, die mittels des Steuerventils (15) mit einem Unterdruck oder dem Atmosphärendruck beaufschlagbar ist.

4. Bremsanlage nach Anspruch 3, **dadurch gekennzeichnet, dass** die Unterdruckkammer (23) an eine Luftabsaugvorrichtung, z.B. eine Vakuumpumpe (25) anschließbar ist.

5. Bremsanlage nach wenigstens Anspruch 2, **dadurch gekennzeichnet, dass** dem Motor-Pumpen-Aggregat (16) ein analog regelbares, stromlos geschlossenes 2/2-Wegeventil (26) parallelgeschaltet ist.

6. Bremsanlage nach einem der Anspruche 1 bis 5, **dadurch gekennzeichnet, dass** zwischen der Zylinder-Kolbenanordnung (14) und dem Zwischenraum (11) ein elektrisch betätigbares, stromlos offenes 2/2-Wegeventil (27) geschaltet ist, das in der aktivierten Schaltstellung die Funktion eines zur Kolben-Zylinderanordnung (14) hin schließenden Rückschlagventils erfüllt.

7. Bremsanlage nach wenigstens Anspruch 3, **dadurch gekennzeichnet, dass** ein Wegsensor (30) zum Erfassen der Bewegung der beweglichen Wand (22) vorgesehen ist.

8. Bremsanlage nach einem der Ansprüche 1 bis 7, **dadurch gekennzeichnet, dass** zwischen dem ersten (2) und dem dritten Kolben (5) ein vierter Kolben (8) angeordnet ist, auf dem sich elastische Elemente (6, 7) des Pedalwegsimulators abstützen.

9. Bremsanlage nach Anspruch 8, **dadurch gekennzeichnet, dass** der vierte Kolben (8) einen Durchlass (35) aufweist, durch den ein vom ersten (2) und vierten Kolben (8) begrenzter Simulatorraum (21) mit einer vom vierten (8) und dritten Kolben (5) begrenzten hydraulischen Kammer (9) kommuniziert.

10. Bremsanlage nach Anspruch 9, **dadurch gekennzeichnet, dass** der dritte Kolben (5) einen Durchlass zwischen der hydraulischen Kammer (9) und dem Zwischenraum (11) aufweist, in dem ein fünfter Kolben (33) hydraulisch abgedichtet, axial verschiebbar angeordnet ist, dessen Bewegung durch mit dem dritten Kolben (5) zusammenwirkende Anschläge (49, 50) begrenzt ist, von denen einer (49) in der Betätigungsrichtung und der andere (50) entgegen der Betätigungsrichtung wirkt.

11. Bremsanlage nach Anspruch 10, **dadurch gekennzeichnet, dass** zwischen dem fünften Kolben (33) und dem dritten Kolben (5) eine Druckfeder (45) vorgesehen ist, die bei drucklosem Zwischenraum (11) den in der Betätigungsrichtung wirkenden Anschlag (49) zur Anlage am dritten Kolben (5) bringt.

12. Bremsanlage nach Anspruch 10 oder 11 **dadurch gekennzeichnet, dass** eine im dritten Kolben (5) geführte Relativbewegung des vierten Kolbens (8) gegenüber dem fünften Kolben (33) nach einem definierten Betätigungsweg zur Anlage des vierten Kolbens (8) am fünften Kolben (33) führt, so dass eine kraftübertragende Verbindung zwischen dem vierten Kolben (8) und dem fünften Kolben (33) hergestellt wird.

13. Bremsanlage nach einem der Ansprüche 8 bis 12 **dadurch gekennzeichnet, dass** eine Bewegung des vierten Kolbens (8) im dritten Kolben (5) entgegen der Betätigungsrichtung durch einen Anschlag (51) am fünften Kolben (33) oder einen Anschlag am dritten Kolben (5) begrenzt ist.

14. Bremsanlage nach Anspruch 13 **dadurch gekennzeichnet, dass** zwischen dem dritten Kolben (5) und dem vierten Kolben (8) eine Druckfeder (46) vorgesehen ist, die bei unbetätigtem Bremspedal den vierten Kolben (8) an dem Anschlag (51) zur Anlage bringt.

15. Bremsanlage nach einem der Ansprüche 1 bis 14, **dadurch gekennzeichnet, dass** das Steuerventil (15) in einem im Eingangsbereich des Hauptzylindergehäuses (20) angeordneten Steuerventilgehause (38) ausgebildet ist und aus einem Unterdruckdichtsitz (39), einem Atmosphärendichtsitz (40) sowie einem Ventilkörper (41) besteht, wobei der Unterdruckdichtsitz (39) an einem im Steuerventilgehäuse (38) geführten, axial beweglichen, mit pneumatischen Durchlässen versehenen Ring (42) und der Atmosphärendichtsitz (40) am vierten Kolben (8) ausgebildet sind.

16. Bremsanlage nach Anspruch 1 und 15, **dadurch gekennzeichnet, dass** die Fremdbetätigung des Steuerventils (15) mittels eines elektromechanischen Aktuators, vorzugsweise eines Elektromagneten (43) erfolgt, dessen Anker (44) mit dem Ring (42) verbunden ist.

17. Bremsanlage nach einem der Ansprüche 1 bis 16, **dadurch gekennzeichnet, dass** eine hydraulische Absperrvorrichtung zum Koppeln der Bewegungen des ersten (2) und des dritten Kolbens (5) vorgesehen ist, die in Abhängigkeit vom Verfahrweg des dritten Kolbens (5) im Gehäuse (20) aktiviert wird.

18. Bremsanlage nach Anspruch 9 und 17, **dadurch gekennzeichnet, dass** die Absperrvorrichtung durch einen vom vierten Kolben (8) und ersten Kolben (2) begrenzten Simulatorraum (21), die Kammer (9) sowie eine absperrbare hydraulische Verbindung der Kammer (9) mit dem Druckmittelvorratsbehälter (48) des Hauptzylinders (1) gebildet ist.

19. Bremsanlage nach Anspruche 17 oder 18, **dadurch gekennzeichnet, dass** in der Absperrvorrichtung enthaltene hydraulische Verbindungen als hydraulische Drosselelemente der hydraulischen Bedämpfung des Pedalwegsimulators (6,7) dienen.

20. Bremsanlage nach Anspruch 19, **dadurch gekennzeichnet, dass** wenigstens eines der hydraulischen Drosselelemente ein durchströmungsrichtungsabhängiges Verhalten aufweist.

21. Bremsanlage nach wenigstens Ansprüchen 2 und 5 und 6, **dadurch gekennzeichnet, dass** ein Sensor, vorzugsweise ein Drehwinkelsensor (37) zum Erfassen von Bremspedalposition und -bewegung vorgesehen ist, dessen Ausgangssignal einer elektronischen Steuereinheit zugeführt wird und der Ansteuerung des Steuerventils (15), des Motor-Pumpenaggregats (16) sowie der 2/2-Wegeventile (26, 27) dient.

22. Bremsanlage nach einem der vorhergehenden Ansprüche **dadurch gekennzeichnet, dass** die Radbremszylinder an den Hauptzylinder (1) mittels eines Radbremsdruckmodulationsmoduls (29) angeschlossen sind.

23. Bremsanlage nach wenigstens Ansprüchen 2 und 5 und 6 und 22, **dadurch gekennzeichnet, dass** das Motor-Pumpenaggregat(16), die 2/2-Wegeventile (26, 27) und das Radbremsdruckmodulationsmodul (29) eine Baueinheit bilden.

## Claims

1. Brake system for motor vehicles, having
• a master cylinder (1) to which wheel brake cylinders can be connected,
• a first piston (2) which is coupled by means of a pressure rod (28), which transmits actuating forces, to a brake pedal (3),
• a second piston (4) by means of which the master cylinder (1) is actuated,
• a third piston (5) which can be actuated by the first piston (2) and which can be connected in a force-transmitting manner to the second piston (4),
• at least one elastic element (6, 7) which forms a pedal travel simulator which imparts an acceptable pedal feel to the vehicle driver in the "brake by wire" operating mode,
• means for coupling the movements of the first and third pistons, which means are activated as a function of the movement travel of the third piston (5) in a housing (20),
• an intermediate space (11), which can be acted on with hydraulic pressure, between the second piston (4) and third piston (5), with a pressurization of the intermediate space (11) loading the second and third pistons (4, 5) in opposite directions,
• and a pressure generating module (13) which allows the intermediate chamber (11) to be both filled with pressure medium and also emptied of pressure medium,
**characterized in that** the pressure generating module (13) is designed as a piston-cylinder arrangement (14) which can be actuated by means of a pneumatic actuator (10) and **in that** the pneumatic actuator (10) can be actuated by means of a control valve (15) which can be actuated externally both by means of the brake pedal (3) and also independently of the brake pedal (3).

2. Brake system according to Claim 1, **characterized in that** a motor-pump unit (16) which can be connected to the piston-cylinder arrangement (14) is provided.

3. Brake system according to Claim 1 or 2, **characterized in that** the pneumatic actuator (10) has a housing (17) whose interior space is divided by a movable wall (22) into a vacuum chamber (23) and a working chamber (24) which can be acted on by means of the control valve (15) with a vacuum or with atmospheric pressure.

4. Brake system according to Claim 3, **characterized in that** the vacuum chamber (23) can be connected to an air evacuation device, for example a vacuum pump (25).

5. Brake system according to at least Claim 2, **characterized in that** a 2/2-way valve (26) which can be controlled in analogue fashion and which is closed in the currentless state is connected in parallel with the motor-pump unit (16).

6. Brake system according to one of Claims 1 to 5, **characterized in that** an electrically actuable 2/2-way valve (27) which is open in the currentless state is connected between the piston-cylinder arrangement (14) and the intermediate space (11), which 2/2-way valve (27), in the activated switching position, performs the function of a non-return valve which closes in the direction of the piston-cylinder arrangement (14).

7. Brake system according to at least Claim 3, **characterized in that** a travel sensor (30) is provided for measuring the movement of the movable wall (22).

8. Brake system according to one of Claims 1 to 7, **characterized in that** a fourth piston (8) is arranged between the first piston (2) and the third piston (5), on which fourth piston (8) elastic elements (6, 7) of the pedal travel simulator are supported.

9. Brake system according to Claim 8, **characterized in that** the fourth piston (8) has a passage (35) by means of which a simulator space (21) which is delimited by the first piston (2) and fourth piston (8) communicates with a hydraulic chamber (9) which is delimited by the fourth piston (8) and third piston (5).

10. Brake system according to Claim 9, **characterized in that** the third piston (5) has a passage between the hydraulic chamber (9) and the intermediate space (11), in which passage a fifth piston (33) is arranged so as to be hydraulically sealed off and axially movable, the movement of which fifth piston (33) is limited by stops (49, 50) which interact with the third piston (5), one (49) of which stops acts in the actuating direction and the other (50) of which stops acts counter to the actuating direction.

11. Brake system according to Claim 10, **characterized in that** a compression spring (45) is provided between the fifth piston (33) and the third piston (5), which pressure spring (45), when the intermediate space (11) is unpressurized, places that stop (49) which acts in the actuating direction in contact against the third piston (5).

12. Brake system according to Claim 10 or 11, **characterized in that** a relative movement, which is guided in the third piston (5), of the fourth piston (8) with respect to the fifth piston (33) leads, after a defined actuating travel, to the fourth piston (8) coming into contact with the fifth piston (33), such that a force-transmitting connection is produced between the fourth piston (8) and the fifth piston (33).

13. Brake system according to one of Claims 8 to 12, **characterized in that** a movement of the fourth piston (8) in the third piston (5) counter to the actuating direction is limited by a stop (51) on the fifth piston (33) or a stop on the third piston (5).

14. Brake system according to Claim 13, **characterized in that** a compression spring (46) is provided between the third piston (5) and the fourth piston (8), which compression spring (46), when the brake pedal is not actuated, places the fourth piston (8) in contact against the stop (51).

15. Brake system according to one of Claims 1 to 14, **characterized in that** the control valve (15) is formed in a control valve housing (38) which is arranged in the inlet region of the master cylinder housing (20), and said control valve (15) is composed of a vacuum sealing seat (39), an atmospheric sealing seat (40) and a valve body (41), with the vacuum sealing seat (39) being formed on an axially movable ring (42) which is guided in the control valve housing (38) and which is provided with pneumatic passages, and with the atmospheric sealing seat (40) being formed on the fourth piston (8).

16. Brake system according to Claims 1 and 15, **characterized in that** the external actuation of the control valve (15) takes place by means of an electromechanical actuator, preferably an electromagnet (43), whose armature (44) is connected to the ring (42).

17. Brake system according to one of Claims 1 to 16, **characterized in that** a hydraulic shut-off device for coupling the movements of the first piston (2) and the third piston (5) is provided, which hydraulic shut-off device is activated as a function of the movement travel of the third piston (5) in the housing (20).

18. Brake system according to Claims 9 and 17, **characterized in that** the shut-off device is formed by a simulator space (21) which is delimited by the fourth piston (8) and the first piston (2), the chamber (9) and a hydraulic connection, which can be shut off, of the chamber (9) to the pressure medium reservoir (48) of the master cylinder (1).

19. Brake system according to Claim 17 or 18, **characterized in that** hydraulic connections which are provided in the shut-off device serve, as hydraulic throttle elements, to hydraulically dampen the pedal travel simulator (6, 7).

20. Brake system according to Claim 19, **characterized in that** at least one of the hydraulic throttle elements has throughflow-direction-dependent characteristics.

21. Brake system according to at least Claims 2 and 5 and 6, **characterized in that** a sensor, preferably a rotational angle sensor (37), is provided for measuring the brake pedal position and movement, the output signal of which sensor is supplied to an electronic control unit and serves for activating the control valve (15), the motor-pump unit (16) and the 2/2-way valves (26, 27).

22. Brake system according to one of the preceding claims, **characterized in that** the wheel brake cylinders are connected to the master cylinder (1) by means of a wheel brake pressure modulation module (29).

23. Brake system according to at least Claims 2 and 5 and 6 and 22, **characterized in that** the motor-pump unit (16), the 2/2-way valves (26, 27) and the wheel brake pressure modulation module (29) form a structural unit.

## Revendications

1. Système de freinage pour véhicules automobiles, comprenant :
- un cylindre principal (1) auquel peuvent être raccordés des cylindres de frein de roue,
- un premier piston (2) qui est accouplé à une pédale de frein (3) par le biais d'une tige de pression (28) transmettant des forces d'actionnement,
- un deuxième piston (4), par le biais duquel le cylindre principal (1) est actionné,
- un troisième piston (5) qui peut être actionné par le premier piston (2), et qui peut être amené en liaison de transmission de force avec le deuxième piston (14),
- au moins un élément élastique (6, 7) qui forme un simulateur de course de pédale, qui dans le mode de fonctionnement de freinage par fil (brake-by-wire) confère au conducteur du véhicule une sensation agréable au niveau de la pédale,
- des moyens pour accoupler les mouvements du premier et du troisième piston, qui sont activités en fonction de la course de déplacement du troisième piston (5) dans un boîtier (20),
- un espace intermédiaire (11) pouvant être sollicité avec une pression hydraulique entre le deuxième (4) et le troisième piston (5), une sollicitation en pression de l'espace intermédiaire (11) sollicitation le deuxième et le troisième piston (4, 5) dans la direction opposée,
- et un module de génération de pression (13), qui permet à la fois de remplir l'espace intermédiaire (11) avec du fluide sous pression ainsi que de le vider,
**caractérisé en ce que** le module de génération de pression (13) est réalisé sous forme d'un agencement de cylindre-piston (14) pouvant être actionné au moyen d'un actionneur pneumatique (10), et **en ce que** l'actionneur pneumatique (10) peut être actionné au moyen d'une soupape de commande (15), qui peut être commandée à distance à la fois par la pédale de frein (3) et aussi indépendamment de la pédale de frein (3).

2. Système de freinage selon la revendication 1, **caractérisé en ce que** l'on prévoit un groupe moteur-pompe (16) pouvant être connecté à l'agencement cylindre-piston (14).

3. Système de freinage selon la revendication 1 ou 2, **caractérisé en ce que** l'actionneur pneumatique (10) présente un boîtier (17) dont l'espace intérieur est divisé par une paroi mobile (22) en une chambre de dépression (23) et une chambre de travail (24), qui peut être sollicité au moyen de la soupape de commande (15) par une dépression ou par la pression atmosphérique.

4. Système de freinage selon la revendication 3, **caractérisé en ce que** la chambre de dépression (23) peut être raccordée à un dispositif d'aspiration d'air, par exemple une pompe a vide (25).

5. Système de freinage selon au moins la revendication 2, **caractérisé en ce que** l'on monte en parallèle au groupe moteur-pompe (16) une soupape à 2/2 voies (26) fermée sans courant et réglable de manière analogique.

6. Système de freinage selon l'une quelconque des revendications 1 à 5, **caractérisé en ce que** l'on monte entre l'agencement cylindre-piston ton (14) et l'espace intermédiaire (11) une soupape à 2/2 voies (27) ouverte sans courant et à commande électrique, qui, dans la position de commutation activée a la fonction d'une soupape antiretour se fermant vers l'agencement cylindre-piston (14).

7. Système de freinage selon au moins la revendication 3, **caractérisé en ce qu'**un capteur de distance (30) est prévu pour détecter le mouvement de la paroi mobile (22).

8. Système de freinage selon l'une quelconque des revendications 1 à 7, **caractérisé en ce que** l'on dispose entre le premier (2) et le troisième piston (5) un quatrième piston (H) sur lequel s'appuient des éléments élastiques (6, 7) du simulateur de course de pédale.

9. Système de freinage selon la revendication 8, **caractérisé en ce que** le quatrième piston (8) présente un passage (35) à travers lequel un espace de simulateur (21) limité par le premier (2) et le quatrième piston (8) communique avec une chambre hydrauliqe (9) limitée par le quatrième (8) et le troisième piston (b).

10. Système de freinage selon la revendication 9, **caractérisé en ce que** le troisième piston (5) présente un passage entre la chambre hydraulique (9) et l'espace intermédiaire (11), dans lequel est disposé un cinquième piston (33) fermé hermétiquement hydrauliquement, déplaçable axialement, dont le déplacement est limité par des butées (49, 50) coopérant avec le troisième piston (5), dont l'une (49) agit dans la direction d'actionnement et l'autre (50) agit à l'encontre de la direction d'actionnement.

11. Système de freinage selon la revendication 10, **caractérisé en** co qu'entre le cinquième piston (33) et le troisième piston (5) est prévu un ressort de pression (45), qui, lorsque l'espace intermédiaire (11) (11) est sans pression, amène la butée (49) agissant dans la direction d'actionnement en appui contre le troisième piston (5).

12. Système de freinage selon la revendication 10 ou 11, **caractérise en ce qu'**un mouvement relatif du quatrième piston (8) guidé dans le troisième piston (5) par rapport au cinquième piston (33) conduit après une course d'actionnement définie jusqu'à la butée du quatrième piston (8) contre le cinquième piston (33), de sorte qu'une liaison de transmission de force entre le quatrième piston (8) et le cinquième piston (33) soit établie.

13. Système de freinage selon l'une quelconque des revendications 8 à 12, **caractérisé en ce qu'**un déplacement du quatrième piton (8) dans le troisième piston (5) à l'encontre de la direction d'actionnement est limité par une butée (51) sur le cinquième piston (33) ou par une butée sur le troisième piston (5).

14. Système de freinage selon la revendication 13, **caractérisé en ce qu'**entre le troisième piston (5) et le quatrième piston (8) est prévu un ressort de pression (46), qui, lorsque la pédale de frein n'est pas actionnée, amène le quatrième piston (8) en appui contre la butée (51).

15. Système de freinage selon l'une quelconque des revendications 1 à 14, **caractérisé en ce que** la soupape de commande (15) est t réalisée dans un boîtier de soupape de commande (38) disposé dans la région d'entrée du boîtier de cylindre principal (20), et se compose d'un siège d'étanchéité de dépression (39), d'un siège d'étanchéité d'atmosphère (40) ainsi que d'un corps de soupape (41), le siège d'étanchéité de dépression (39) étant réalisé sur une bague (42) guidée dans le boîtier de soupape de commande (38), mobile axialement, et pourvue de passages pneumatiques, et le siège d'étanchéité d'atmosphère (40) étant réalisé sur le quatrième piston (8).

16. Système de freinage selon les revendications 1 et 15, **caractérisé en ce que** la commande à distance de la soupape de commande (15) s'effectue au moyen d'un actionneur électromécanique, de préférence d'un électroaimant (43), dont l'induit (44) est connecté à la bague (42)

17. Système de freinage selon l'une quelconque des revendications 1 à 16, **caractérisé en ce qu'**un dispositif de blocage hydraulique pour l'accouplement des mouvements du premier (2) et du troisième piston (5) est prévu, lequel est activé en fonction de la course de déplacement du troisième piston (5) dans le boîtier (20).

18. Système de freinage selon les revendications 9 et 17, **caractérisé en ce que** le dispositif de blocage est formé par rapport un espace de simulateur (21) limité par le le quatrième piston (8) et le premier piston (2), la chambre (9), ainsi qu'une connexion hydraulique blocable de la chambre (9) au réservoir de fluide sous pression (48) du cylindre principal (1).

19. Système de freinage selon les revendications 17 ou 18, **caractérisé en ce que** des connexions hydrauliques contenues dans le dispositif de blocage servent d'éléments d'étranglement pour l'atténuation hydraulique du simulateur de course de pédale (6, 7).

20. Système de freinage selon la revendication 19, **caractérisé en ce qu'**au moins l'un des éléments d'étranglement hydrauliques présente un comportement dépendant de la direction d'écoulement.

21. Système de freinage selon au moins les revendications 2 et 5 et 6, **caractérisé en ce qu'**un capteur, de préférence un capteur d'angle de rotation (37) pour détecter la position de la pédale de frein et son déplacement est prévu, dont le signal de sortie est acheminé à une unité de commande électronique et qui sert à la commande de la soupape de commande (15), du groupe moteur-pompe (16), ainsi que des soupapes à 2/2 voies (26, 24).

22. Système de freinage selon l'une quelconque des revendications précédentes, **caractérisé en ce que** les cylindres de frein de roue sont raccordés au cylindre principal (1) au moyen d'un module de modulation de pression de frein de roue (29).

23. Système de freinage selon au moins les revendications 2 et 5 et 6 et 22, **caractérisé en ce que** le groupe moteur-pompe (16), les soupapes à 2/2 voies (26, 27) et le module de modulation de pression de frein de roue (29) forment une unité constructive.
